# FASCICULE DE BREVET EUROPEEN

(11) **EP 3 134 627 B1**
(45) Date de publication et mention de la délivrance du brevet: **05.08.2020**
(21) Numéro de dépôt: 15713911.4
(22) Date de dépôt: 08.04.2015
(51) Int. Cl.: F02B 23/06

(54) **MOTEUR À COMBUSTION INTERNE À INJECTION DIRECTE À DOUBLE ANGLE DE NAPPE POUR RÉALISER UN MÉLANGE CARBURÉ DANS UNE CHAMBRE DE COMBUSTION À DOUBLE ZONE DE COMBUSTION ET À FAIBLE TAUX DE COMPRESSION ET PROCÉDÉ POUR UTILISER UN TEL MOTEUR**
BRENNKRAFTMASCHINE MIT DIREKTE DOPPEL WINKEL EINSPRITZUNG FÜR EINE BRENNKAMMER MIT EINEM DOPPELVERBRENNUNGSZONE UND EINEM NIEDRIGEN VERDICHTUNGSVERHÄLTNIS UND VERFAHREN ZUR VERWENDUNG IN EINEM MOTOR.
INTERNAL COMBUSTION ENGINE HAVING A DOUBLE ANGLED DIRECT INJECTION TO PRODUCE A FUEL MIXTURE IN A COMBUSTION CHAMBER WITH A DOUBLE COMBUSTION ZONE AND A LOW COMPRESSION RATIO AND METHOD FOR ITS USE IN AN ENGINE.

(30) Priorité: 24.04.2014 FR 1453660
(43) Date de publication de la demande: 01.03.2017
(73) Titulaire: IFP Energies nouvelles, 92500 Rueil-Malmaison (FR)
(72) Inventeur: MARTINEZ ALVARADO, Luis Enrique, F-78380 Bougival (FR); RICHARD, Stéphane, F-78550 Bazainville (FR); LAGET, Olivier, F-92500 Rueil-Malmaison (FR)
(74) Mandataire: IFP Energies nouvelles
(86) Numéro de dépôt international: PCT/EP2015/057594
(87) Numéro de publication internationale: WO 2015/162005

(56) Documents cités:
- EP-A1- 2 615 296
- WO-A2-2013/016713
- FR-A1- 2 887 586
- John B. Heywood: "INTERNAL COMBUSTION ENGINE FUNDAMENTALS", 1 avril 1988 (1988-04-01), McGraw-Hill, Singapore, XP002730572, ISBN: 0-07-100499-8 page 342 - page 345
- XU, HONGMING: "SOME CRITICAL TECHNICAL ISSUES ON THE STEADY FLOW TESTING OF CYLINDER HEADS", SAE TECHNICAL PAPERS, 5 March 2001 (2001-03-05), Detroit ISSN: 0148-7191, DOI: https://doi.org/10.4271/2001-01-1308

## Description

La présente invention se rapporte à un moteur à combustion interne à injection directe, notamment à un moteur à allumage par compression, et à un procédé de contrôle de l'injection de combustible dans un tel moteur.

Elle concerne plus particulièrement un moteur utilisé dans le domaine aéronautique ou routier ou dans le domaine des installations stationnaires, comme un groupe électrogène.

Ce type de moteur comprend généralement au moins un cylindre, un piston comprenant un téton disposé dans un bol concave et coulissant dans ce cylindre en un mouvement rectiligne alternatif, des moyens d'admission d'un comburant, des moyens d'échappement de gaz brûlés, une chambre de combustion, et des moyens d'injection pour injecter un combustible dans la chambre de combustion.

Comme cela est généralement admis, lors de la conception d'un moteur, les contraintes de performances, d'émissions de polluants et de tenue mécanique de la chambre de combustion sont de plus en plus fortes alors que les moyens de les satisfaire sont opposés.

Ainsi l'augmentation des performances entrainent généralement une augmentation des émissions de polluants et des contraintes mécaniques plus fortes.

Il est nécessaire de pallier ces contraintes de manière à garantir une émission de polluants limitée et une tenue mécanique satisfaisante sur toute la plage de fonctionnement du moteur et en particulier à très forte charge. En particulier pour les émissions polluantes l'utilisation de la totalité du comburant présent dans la chambre de combustion, par exemple un comburant comprenant de l'air à pression ambiante, de l'air suralimenté, ou un mélange d'air (suralimenté ou non) et de gaz brûlés recirculés, est d'une grande importance.

En effet, il est nécessaire que le mélange carburé (comburant/combustible) dans la chambre de combustion soit le plus homogène possible.

En pratique, le combustible reste confiné dans le bol et ne peut pas se mélanger au comburant situé notamment dans la chasse, c'est-à-dire dans le volume localisé dans la partie haute de la chambre de combustion délimitée par la paroi du cylindre et la face de la culasse en regard du piston.

Ceci a pour inconvénients de créer des zones à fortes richesse dans la chambre de combustion engendrant une forte production de suies, d'oxyde de carbone (CO) et d'hydrocarbures imbrûlés (HC) lors de la combustion de ce mélange carburé.

De plus, pour revenir sur la problématique de tenue mécanique, la charge thermique est concentrée sur le réentrant du piston, c'est-à-dire le col ou la restriction de diamètre de bol qui marque la transition entre le bol du piston et la zone supérieure englobant la chasse, ce qui peut être limitant en termes de tenue mécanique à très fortes charges.

Pour pallier ces inconvénients, et comme cela est mieux décrit dans la demande de brevet français N° 13 60426 du demandeur, il est prévu d'utiliser un moteur à combustion interne comprenant des moyens d'injection de combustible avec des jets selon au moins deux angles de nappe et un piston comportant un bol muni d'un téton avec deux volumes de zones de combustion et une aérodynamique interne améliorant sensiblement la qualité de la combustion.

Ceci permet d'utiliser une plus grande quantité de comburant comparé aux moteurs traditionnels et de répartir la charge thermique sur une plus grande surface de la chambre de combustion.

Dans ce type de moteurs, le mélange entre le combustible injecté et le comburant, tel que de l'air à pression ambiante ou de l'air suralimenté ou encore un mélange d'air (suralimenté ou non) avec des de gaz d'échappement recirculés, admis dans la chambre de combustion se fait en deux temps.

Tout d'abord lors de l'injection du combustible, le comburant, situé à la périphérie du jet de combustible, est entraîné par ce même jet. Un mélange à petite échelle issue de la turbulence générée par cet entraînement se produit alors.

Afin d'améliorer ce mélange combustible/comburant, on utilise dans un second temps un mouvement tourbillonnaire du comburant, appelé swirl, qui vient "brasser" à grande échelle le combustible non mélangé. Ce swirl peut être vu comme un mouvement de rotation du comburant autour d'un axe sensiblement parallèle ou confondu avec celui de la chambre de combustion. Ce swirl peut être obtenu par une admission particulière du comburant, tel que par une géométrie spécifique des conduits d'admission. Un exemple de moteur avec une technique similaire est montré dans EP-2615296.

Dans cette configuration, il faut cependant noter qu'alors que le mélange à petite échelle réalisé dans le spray gazeux est très rapide, le mélange à grande échelle associé au mouvement de swirl se fait plus lentement.

Les performances du moteur, sa consommation de combustible ou encore les émissions de polluants comme les suies, le monoxyde de carbone ou les hydrocarbures imbrûlés, sont très dépendantes de la capacité à mélanger rapidement le combustible avec le comburant admis.

Un travail d'optimisation du système d'injection et du niveau de swirl est donc généralement réalisé afin d'optimiser les prestations du moteur.

Une des solutions consiste à utiliser un taux de swirl, dénommé Ns, relativement élevé, de l'ordre de 2 à 3, ce taux étant égal au rapport entre la vitesse de rotation du mouvement tourbillonnaire du comburant et celle du vilebrequin.

Un inconvénient de cette solution est que, sur certains points de fonctionnement du moteur et plus particulièrement lorsque la pression d'injection de combustible est faible, ou encore lorsqu'une grande quantité de combustible est injectée, les jets de combustible peuvent être déviés circonférentiellement d'une manière excessive, résultant en une interaction, voire une superposition entre les différents jets.

Ce phénomène peut faire augmenter significativement les émissions de suies et d'hydrocarbures imbrulés, tout en dégradant le rendement de combustion et donc la puissance et la consommation.

La présente invention se propose de remédier aux inconvénients mentionnés ci-dessus grâce à un procédé qui permet d'obtenir un meilleur mélange entre le comburant (fluide gazeux) et le combustible injecté tout en autorisant l'utilisation d'un système d'injection de combustible à au moins deux angles de nappe et un piston dont le profil permet à la chambre de combustion de comporter au moins deux zones de combustion.

A cet effet, l'invention concerne un moteur à combustion interne à injection directe à allumage par compression comprenant au moins un cylindre, une culasse portant des moyens d'injection de combustible, un piston coulissant dans ce cylindre, une chambre de combustion délimitée sur un côté par la face supérieure du piston comportant un téton s'érigeant en direction de la culasse et disposé au centre d'un bol concave avec au moins deux zones de mélange, lesdits moyens d'injection comprenant au moins un injecteur projetant du combustible selon au moins deux nappes de jets de combustible d'angles de nappe différents, une nappe inférieure d'axe de jet C1 pour la zone et une nappe supérieure d'axe de jet C2 pour la zone, caractérisé en ce que l'injecteur de combustible comprend au moins deux rangées d'orifices d'injection placées l'une au-dessus de l'autre et que nombre d'orifices de chaque rangée est plus grand ou égal que -4.Ns+14 et plus petit ou égal que - 4.Ns+16 pour la rangée inférieure ou -4.Ns+18 pour la rangée supérieure, où Ns est le taux de swirl de ce moteur.

Le taux de compression minimal peut être aux environs de 13,5 et le taux de compression maximal peut être aux environs de 16,5.

Le nombre de swirl peut être préférentiellement inférieur à 1,5 et de manière encore plus préférentiellement de l'ordre de 1.

Les orifices des jets de combustibles d'une nappe de combustible présente un déphasage angulaire avec les orifices des jets de combustibles de l'autre nappe de combustible.

Les nappes de jets de combustible comprennent un angle de nappe différent l'un de l'autre.

L'invention concerne également un procédé d'injection de combustible pour un moteur à combustion interne à injection directe à allumage par compression comprenant au moins un cylindre, une culasse portant des moyens d'injection de combustible, un piston coulissant dans ce cylindre, une chambre de combustion délimitée sur un côté par la face supérieure du piston comportant un téton s'érigeant en direction de la culasse et disposé au centre d'un bol concave, ledit procédé consistant à injecter le combustible selon au moins deux nappes de jets de combustible d'angles de nappe différents, une nappe inférieure d'axe de jet C1 et une nappe supérieure d'axe de jet C2, caractérisé en ce qu'il consiste à injecter le combustible par deux rangées d'orifices d'injection placées l'une au-dessus de l'autre et que nombre d'orifices de chaque rangée est plus grand ou égal que -4.Ns+14 et plus petit ou égal que -4.Ns+16 pour la nappe inférieure ou -4.Ns+18 pour la nappe supérieure où Ns est le nombre de swirl de ce moteur

Les autres caractéristiques et avantages de l'invention vont apparaître maintenant à la lecture de la description qui va suivre, donnée à titre uniquement illustratif et non limitatif, et à laquelle sont annexées :
- la figure 1 qui montre un moteur à combustion interne selon l'invention ;
- la figure 2 qui est une vue partielle à grande échelle d'une demi-section du profil du bol de piston du moteur de la figure 1 ;
- la figure 3 qui est une vue en coupe locale transversale du bol pendant la phase initiale d'injection de combustible ;
- les figures 3A et 3B qui sont des vues en coupe selon respectivement les lignes AA et BB de la figure 3;
- la figure 4 qui est une autre vue en coupe locale transversale du bol pendant la phase terminale d'injection de combustible;
- les figures 4A et 4B qui sont des vues en coupe selon respectivement les lignes AA et BB de la figure 4;
- la figure 5 qui est une variante de la figure 3 avec une vue en coupe locale transversale du bol pendant la phase initiale d'injection de combustible ;
- la figure 5A qui est une vue en coupe selon la ligne AA de la figure 5;
- la figure 6 qui est une autre vue en coupe locale transversale du bol (de la variante exposée en figure 5) pendant la phase terminale d'injection de combustible et
- la figures 6A qui est une vue en coupe selon la ligne AA de la figure 6.
- la figure 7 qui est un graphique représentant la corrélation du nombre de trous avec le nombre de swirl Ns pour chacune des deux nappes.

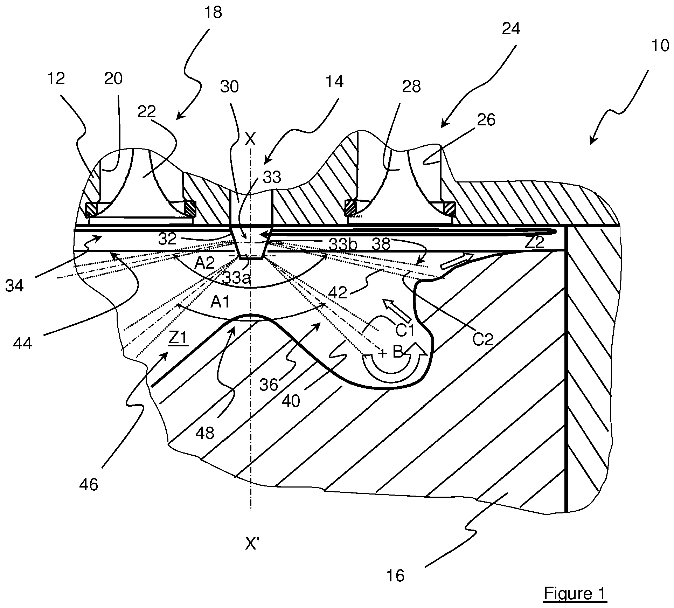

En se référant à la figure 1, un moteur à combustion interne de taux de compression faible préférentiellement compris entre 13,5 et 16,5, à injection directe à allumage par compression comprend au moins un cylindre 10, une culasse 12 fermant le cylindre en partie haute, des moyens d'injection de combustible 14 portés par la culasse et un piston 16 d'axe XX' coulissant dans le cylindre en un mouvement rectiligne alternatif.

Par combustible, il est entendu un carburant liquide, comme du gazole, du kérosène ou tout autre combustible ayant les caractéristiques physico-chimiques permettant le fonctionnement d'un moteur de type allumage par compression incluant un système d'injection directe de ce combustible.

Ce moteur comprend également un moyen d'échappement 18 des gaz brûlés avec au moins une tubulure d'échappement 20 dont l'ouverture peut être contrôlée par tous moyens, comme par exemple une soupape d'échappement 22 et un moyen d'admission 24 d'un comburant avec au moins une tubulure d'admission 26 dont l'ouverture peut être contrôlée par tous moyens, comme par exemple une soupape d'admission 28.

Les moyens d'admission sont conformés pour admettre le comburant avec un taux de swirl déterminé de préférence inférieur à 1,5. Pour cela, les moyens d'admission peuvent comporter au moins un moyen de vannage et le moteur peut comprendre au moins un moyen de commande pour actionner le moyen de vannage de manière à obtenir le taux de swirl déterminé, de préférence inférieur à 1,5. Ces moyens d'admission peuvent également comprendre une géométrie spécifique de la tubulure d'admission 26.

Les moyens d'injection comprennent au moins un injecteur de combustible 30, de préférence disposé dans l'axe XX' du piston dont le nez 32 comporte une multiplicité d'orifices 33 au travers desquels le combustible est pulvérisé et projeté en direction de la chambre de combustion 34 du moteur.

C'est à partir de ces moyens d'injection que le combustible projeté forme au moins deux nappes de jets de combustible, ici deux nappes 36 et 38 de jets de combustibles 40 et 42, qui, dans l'exemple montré, ont un axe général confondu avec celui du piston 16 tout en étant situées axialement l'une au-dessus de l'autre.

Plus précisément, la nappe 36, qui est située le plus près du piston 16, est dénommée dans la suite de la description nappe inférieure alors que la nappe 38 placée le plus loin de ce piston est appelée nappe supérieure.

Comme visible sur la figure 1, ces deux nappes forment des angles de nappe A1 et A2 différents l'un de l'autre. Par angle de nappe, il est entendu l'angle au sommet que forme le cône issu de l'injecteur et dont la paroi périphérique fictive passe par tous les axes C1 ou C2 des jets de combustible 40 ou 42.

Avantageusement, l'angle de nappe A1 de la nappe basse est de préférence compris entre 40° et 105°, alors que l'angle de nappe A2 de la nappe haute est de préférence compris entre 155° et 180°.

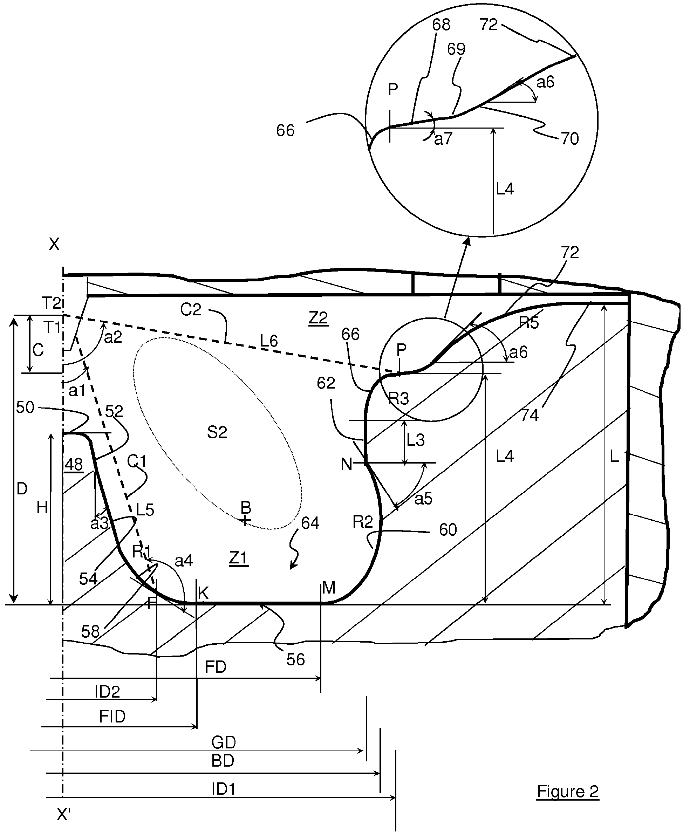

Pour des raisons de simplification dans la suite de la description l'angle a1 correspond à A1/2 alors que l'angle a2 correspond à A2/2 (Voir figure 2).

De manière préférentielle la différence entre l'angle A1 et l'angle A2 est supérieure ou égal à 50°. Ceci permet ainsi de limiter les recouvrements de jets de combustible entres les deux nappes et donc la formation de polluants, tels que les suies, ainsi que toute interaction entre les nappes lors des processus d'injection et de brassage à grande échelle par le swirl.

Cette configuration de l'injecteur permet également de positionner les orifices des deux nappes au-dessus les uns des autres, même si d'une manière générale on pourra préférer les décaler angulairement pour garantir l'absence d'interaction entre les jets, comme cela est mieux décrit dans la demande de brevet français N°14/52119 du demandeur.

Bien entendu, il peut être prévu que les moyens d'injection ne soient pas disposés dans l'axe XX', mais dans ce cas, l'axe général des nappes de jets de combustible issues de l'injecteur de combustible est pour le moins sensiblement parallèle à cet axe XX'.

De même, il peut être prévu que chaque nappe soit portée par un injecteur distinct (injecteur simple nappe) avec un ciblage dédié dans des zones distinctes de la chambre de combustion.

La chambre de combustion 34 est délimitée par la face interne de la culasse 12 en vis à vis du piston, la paroi interne circulaire du cylindre 10 et la face supérieure 44 du piston 16.

Cette face supérieure du piston comporte un bol concave 46, ici d'axe confondu avec celui du cylindre, dont la concavité est tournée vers la culasse et qui loge un téton 48 situé sensiblement au centre du bol, qui s'élève vers la culasse 12, en étant de préférence coaxial avec l'axe des nappes de combustible issues de l'injecteur 30.

Bien entendu, il peut être prévu que l'axe du bol ne soit pas coaxial avec celui du cylindre mais l'essentiel réside dans la disposition selon laquelle l'axe de la nappe de jets de combustible, l'axe du téton et l'axe du bol soient de préférence confondus.

En se rapportant en plus à la figure 2, le téton 48, de forme générale tronconique, comporte un sommet 50 de préférence arrondi, se poursuivant, en s'écartant symétriquement de l'axe XX' vers l'extérieur du piston 16, par une surface inclinée 52 sensiblement rectiligne se poursuivant par un flanc inclinée 54 pour arriver à un fond 56 du bol.

Bien entendu et cela sans sortir du cadre de l'invention, la surface inclinée 52 peut être inexistante (longueur nulle) et le flanc incliné 54 raccorde alors le sommet du téton au fond du bol.

Dans l'exemple de la figure 2, le fond de ce bol est arrondi avec une surface arrondie concave 58 en arc de cercle de rayon R1, dite surface arrondie interne, raccordée au bas du flanc incliné 54 et une autre surface arrondie concave 60 en arc de cercle de rayon R2, dite surface arrondie externe, raccordée par une de ses extrémités à l'extrémité basse de la surface arrondie interne à un point M et par l'autre de ses extrémités à une paroi latérale 62, ici sensiblement verticale, à un point N.

Les deux surfaces arrondies 58 et 60 délimitent ainsi la partie basse d'un volume torique, ici un tore de section sensiblement cylindrique 64 et de centre B dont le rôle sera explicité dans la suite de la description.

La paroi latérale 62 se poursuit, toujours en s'écartant de l'axe XX', par une surface arrondie convexe 66 en arc de cercle de rayon R3, dite réentrant, aboutissant à un plan inclinée 68 relié à une surface d'inflexion concave 69 raccordée à une surface sensiblement plane 70. Cette surface plane se continue par une surface convexe externe 72 en arc de cercle de rayon R5 qui arrive à une surface plane 74 s'avançant jusqu'au voisinage de la paroi du cylindre.

La chambre de combustion comprend ainsi deux zones distinctes Z1 et Z2 dans lesquelles s'effectue le mélange entre le comburant qu'elles contiennent (air - suralimenté ou non - ou mélange d'air et de gaz brûlés recirculés) et le combustible provenant de l'injecteur ainsi que la combustion du mélange carburé ainsi formé.

La zone Z1, délimitée par le téton 48, le tore 64 du fond du bol, la paroi 62 et la surface arrondie convexe 66, forme la zone basse de la chambre de combustion qui est associée à la nappe inférieure 36 de jets de combustible d'axe C1. La zone Z2, démarquée par le plan incliné 68, la surface concave 69, la surface sensiblement plane 70, la surface convexe 72, la surface plane 74, la paroi interne périphérique du cylindre et la culasse 12, constitue la zone haute de cette chambre qui est associée à la nappe supérieure 38 de jets de combustible d'axe C2.

Dans cette configuration, le bol comprend, pour une position du piston proche du point mort haut :
- un diamètre externe de fond de bol FD avec un rayon considéré entre l'axe XX' et le point M le plus bas du bol, c'est à dire à l'intersection entre les surfaces de rayons R1 et R2,
- un diamètre de l'ouverture de bol BD avec un rayon considéré au voisinage du fond du bol et correspondant à une distance prise entre l'axe XX' et le point le plus éloigné de la surface concave externe 60,
- un diamètre de col GD avec un rayon qui correspond à la distance entre l'axe XX' et la paroi verticale 62 qui délimite la section de sortie de ce bol,
- un diamètre d'injection haut ID1 avec un rayon qui correspond à la distance entre l'axe XX' et le début de la surface d'inflexion 69 au point P entre le plan incliné 68 et la surface convexe 66 en délimitant une longueur L6 des jets 38 entre l'origine T2 de l'axe C2 des jets sur l'axe du nez de l'injecteur et le point P et qui répond à la formule ID1/sin(a2),
- une longueur développée de la demi-coupe diamétrale Cb du bol, constituée par la longueur depuis l'intersection du sommet du téton avec l'axe XX' jusqu'à la paroi du cylindre,
- une hauteur H de téton entre le fond du bol au point M jusqu'au sommet du téton,
- une hauteur L du bol entre le fond du bol au point M jusqu'à la surface plane 74,
- une hauteur de jonction L3, qui correspond à l'étendu de la paroi latérale 62, considérée entre la fin de la surface arrondie externe 60 au point N et le début de la surface arrondie externe 66,
- une hauteur L4 considérée entre le point P et le point M,
- un angle d'inclinaison a3 par rapport à une verticale pour le flanc incliné 54,
- un angle d'inclinaison a4 formé par l'axe principal C1 des jets de combustible de la nappe inférieure 36 impactant le tore avec la tangente au point d'impact F en délimitant une longueur L5 des jets 40 entre l'origine T1 de l'axe C1 des jets sur l'axe du nez de l'injecteur et le point F. Cette longueur L5 répond à la formule ID2/sin(a1) avec ID2 qui correspond à un diamètre d'injection bas avec un rayon qui correspond à la distance entre l'axe XX' et le point F,
- un angle d'inclinaison a5 considéré à la tangence de la surface arrondie externe 60 avec la paroi latérale 62 au point N,
- un angle d'inclinaison a6 par rapport à l'horizontal et la tangente à la paroi sensiblement plane 70,
- un angle d'inclinaison a7 par rapport à l'horizontale et le plan incliné 68 au point d'intersection P.

Tous ces paramètres sont appréciés pour une position du piston 16 au voisinage du point mort haut qui correspond à une distance D considérée entre le point M et l'origine T2 de l'axe C2 des jets 42.

Plus précisément, cette distance D est égale à la somme de la hauteur L4 et de la hauteur C, hauteur C qui correspond à la hauteur axiale entre l'origine T2 et le point P. Cette hauteur correspond à la formule ID1/tan(a2).

Ainsi, les paramètres dimensionnels et angulaires de ce bol satisfont à au moins l'une des conditions suivantes :
- l'angle a4 est supérieur à 80°. Ceci revient à faire passer plus de la moitié du jet de combustible entre le centre B du tore 64 et le téton et plus précisément la partie basse au niveau du point M et donc d'assurer un mouvement aérodynamique dans le tore remontant vers le haut du cylindre,
- l'angle a5 doit être positif et inférieur à 90°. Préférentiellement, il doit être de l'ordre de 30° à 40° afin de diriger les jets de combustible 40 de la nappe inférieure 36 vers le volume de comburant S1 pour utiliser le comburant de cette zone tout en limitant la remontée de ce combustible vers la nappe supérieure 38,
- le volume S1 de comburant situé entre les jets 40 de combustible de la nappe inférieure est minimisé, toujours dans le souci d'optimiser l'utilisation du comburant dans la chambre,
- la position du haut du téton 48 est la plus proche possible du nez 32 de l'injecteur 30 afin de limiter le volume de comburant sous l'injecteur qui ne sera pas impacté par les jets de combustible, ce qui revient encore une fois à minimiser le volume S1. Ainsi le rapport H/L est supérieur à 40% et préférentiellement supérieur à 60%,
- l'angle a3 est sensiblement égal ou supérieur à l'angle a1 de la nappe inférieure (-10°<a3-a1<10°). Ainsi, l'axe général des jets de la nappe inférieure tangente le flanc 54 du téton. Les jets de combustible 40 de la nappe inférieure 36 peuvent ainsi interagir avec la surface arrondie 58 en se vaporisant totalement avant d'impacter le piston,
- le volume de comburant S2 entre les deux nappes est non nul puisque l'interaction entre nappes est néfaste pour les polluants. Le volume S2 doit néanmoins être minimisé. Pour se faire, la longueur de jonction L3 entre le tore et le réentrant 66 (surface arrondie convexe de rayon R3) doit être telle que L3/(2*longueur de R2)<1 ou (L3/longueur de R2<2) afin d'assurer que le volume de comburant S2 disponible entre les nappes supérieure 38 et inférieure 36 est faible par rapport au volume de combustible généré par les jets de la nappe inférieure,
- la deuxième zone de combustion Z2 située dans la partie haute du piston qui débute à partir du réentrant 66 est destinée aux jets de combustible 42 de la nappe supérieure 38,
- le volume de combustion de la zone Z2 est au moins égal au dixième du volume total du bol,
- la zone, dite de chasse, est formée par le plan incliné 68, la surface concave 69, la surface plane 70, la surface convexe 72 et la surface plane 74.
- l'angle a6 est compris entre 10° et 75°, ce qui permet d'éclater les jets de combustible 42 pour créer un mouvement aérodynamique au-dessus du piston et additionnellement d'aller utiliser le comburant dans la zone de chasse. Cet aérodynamique permet un meilleur mélange combustible/comburant au-dessus du piston, notamment pendant la détente et favoriser ainsi l'oxydation des gaz brûlés,
- pour favoriser la répartition du combustible issu des jets 42 dans la chasse, une surface 68 de guidage est prévue entre le réentrant 66 et la surface 70. Cette surface de guidage peut être arrondie en prolongement du réentrant ou sensiblement plane. Cette surface de guidage sert à concentrer les jets de combustible 42 et à les guider vers la surface convexe 72. Ainsi cette surface de guidage a un angle a7 au point d'intersection P dont l'écart avec l'angle de nappe a2 est de moins de 45°,
- l'emplacement de la surface d'inflexion 69 est tel que les distances L5 et L6 sont approximativement du même ordre (0.5<L5/L6<2). Ainsi, avantageusement les jets de combustible impacteront sensiblement en même temps le piston dans respectivement le tore et la zone d'inflexion.
- le diamètre ID1 doit être tel que ID1/GD>1 et ID1<(GD+ (Cb-GD)*2/3). Ceci permet aux jets de combustible 42 d'optimiser l'aérodynamique au-dessus du piston.

De plus,
- le rapport BD/L est inférieur à 6, préférentiellement inférieur à 4,
- le rapport R2/R1 est inférieur à 1, préférentiellement inférieur à 0.6,
- le rapport FD/BD est inférieur à 1,
- le rapport Cb/BD est inférieur à 2 pour conserver une vaporisation complète du combustible et éviter le mouillage de la paroi du cylindre,
- le rapport GD/BD est compris entre 0.7 et 1 pour l'aérodynamique du tore et la remontée des jets de combustible,
- le rapport H/L est supérieur à 40%, préférentiellement supérieur à 60% pour minimiser le volume de comburant entre le nez de l'injecteur et le téton,
- le rapport L5/L6 est compris entre 0.5 et 2 pour l'impact des deux nappes au même moment,
- A1 est compris entre 40° et 130° avec a1=A1/2,
- A2 est compris entre 130° et 180° avec a2=A2/2,
- a3 est sensiblement égal à a1,
- a4 est supérieur à 80°,
- a5 est compris entre 0° et 90°, de préférence sensiblement de 30° à 40°,
- l'angle a6 est compris entre 15° et 75°,
- a7-a2 est inférieur à 45°,
- le rapport ID1/GD est supérieur à 1,
- ID1 est inférieur à (GD+(Cb-GD)*2/3).

Ainsi, grâce à ce paramétrage du bol, les jets de combustible de la nappe inférieure 36 ciblent directement le tore 64 et n'impactent pas directement le réentrant 66.

De ce fait, la combustion du mélange combustible/comburant inférieur se déroule essentiellement dans le volume du tore alors que la combustion du mélange combustible/comburant supérieur se déroule essentiellement dans la chasse et au-dessus du piston.

De plus, l'interaction des jets de la nappe supérieure avec les jets de la nappe inférieure est limitée, ce qui permet d'homogénéiser le mélange comburant/combustible tout en respectant des contraintes de tenue mécanique à forte charge.

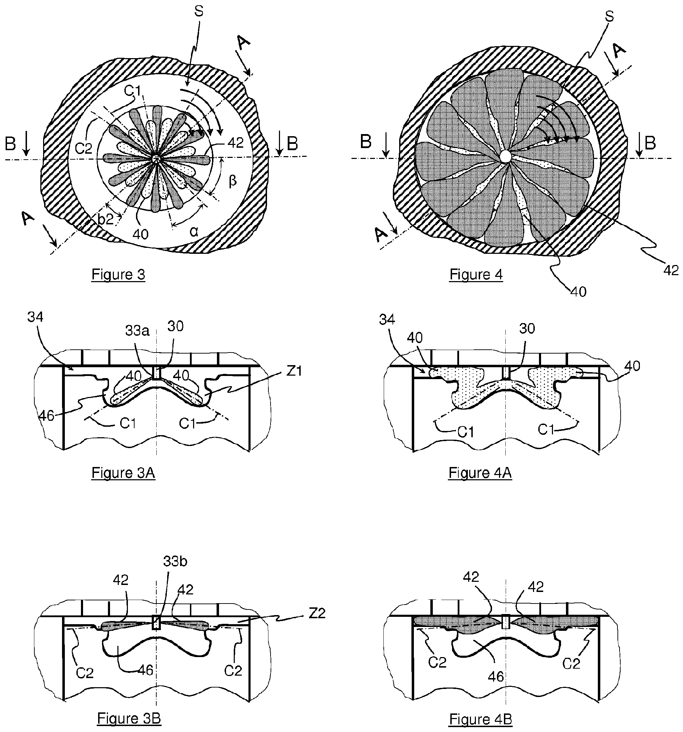

On se rapporte maintenant à la figure 3 en association avec la figure 1 qui illustrent un exemple d'injection de combustible dans la chambre de combustion 34.

Comme déjà mentionné, l'injecteur 30 porte au niveau de son nez 32 des orifices d'injection 33 à partir desquels partent radialement les jets de combustible (voir figure 1). Ces orifices se composent d'au moins deux séries d'orifices radiaux 33a et 33b d'injection de combustible placées sensiblement parallèle l'une à l'autre. Les orifices sont disposés circonférentiellement sur le nez et les séries sont placées l'une au-dessus de l'autre. L'une des séries comporte des orifices 33a au travers desquels le combustible est injecté en formant la nappe inférieure de jets 36 d'axe C1 pour la zone de mélange Z1. L'autre des séries comporte des orifices 33b pour l'injection de combustible formant la nappe supérieure 38 de jets d'axe C2 pour la zone de mélange Z2.

Dans cette configuration, l'injection radiale des jets de combustible se réalise selon une direction radiale qui part de l'injecteur en s'écartant de cet injecteur vers les parois de la chambre de combustion et qui correspond aux axes C1 et C2.

Bien entendu et cela sans sortir du cadre de l'invention, les diamètres des orifices 33a et 33b peuvent être différents. A titre d'exemple, le diamètre des orifices 33a peut être plus grand que le diamètre des orifices 33b. Comme la pression d'injection est identique dans la région du nez de l'injecteur, ceci a pour effet de réaliser deux nappes de jets de combustible avec des débits différents.

Le fait que les deux zones de combustion Z1 et Z2 fonctionnent de manière indépendante, permet également de choisir le nombre d'orifices des deux nappes de manière indépendante.

Sachant que le taux de swirl "Ns" dans la zone Z1 est toujours supérieur au taux de swirl "Ns" dans la zone Z2, on pourra notamment utiliser un nombre de trous supérieur pour la nappe supérieure 38 car les interactions jet à jet d'une même nappe due à l'écoulement tourbillonnaire du fluide gazeux seront plus faibles.

Ainsi, on cherchera à multiplier le nombre d'orifices N des différentes nappes pour favoriser la vitesse du mélange et de la combustion.

Pour la nappe inférieure, il est proposé de corréler le taux de swirl "Ns" dans la zone Z1 et le nombre d'orifices des jets de cette nappe "Ninf" tel que -4.Ns+14≤ Ninf ≤ -4.Ns+16.

Concernant la nappe supérieure 38, la corrélation dépend du nombre d'orifices des jets de combustible de cette nappe "Nsup" avec -4.Ns+14≤Nsup≤-4.Ns+18.

Compte tenu du fait que le taux de swirl dans la zone Z1 est toujours supérieur au taux de swirl dans la zone Z2, on pourra notamment utiliser un nombre d'orifices d'injection supérieur pour la nappe supérieure car les interactions jet à jet de cette nappe due à l'écoulement tourbillonnaire du fluide gazeux seront plus faibles.

De plus, le fait que les deux zones de combustion Z1, Z2 fonctionnent de manière indépendante, permet également de choisir le nombre d'orifices d'injection des deux nappes de manière indépendante.

Le mélange entre le combustible et le comburant est alors principalement réalisé par l'entraînement du comburant par les jets de combustible, la contribution liée au mouvement tourbillonnaire de swirl restant faible et n'étant conservée que pour achever le processus de mélange par un brassage à grande échelle lors de la détente du piston.

En se rapportant maintenant en plus à la figure 3 qui illustre, sans caractère restrictif, un injecteur comportant 24 orifices d'injection avec 12 orifices 33a et 12 orifices 33b, les jets 40 de la nappe 36 sont régulièrement repartis circonférentiellement en étant séparés chacun d'un angle α sensiblement égale à 30° par rapport à leur axe C1 et les jets 42 de la nappe 38 sont également régulièrement repartis circonférentiellement en étant séparés chacun d'un angle β sensiblement égale à 30° par rapport à leur axe C2.

De plus, les orifices 33a de la nappe inférieure et les orifices 33b de la nappe supérieure ont ici un déphasage angulaire, noté b2, qui est ici sensiblement égal au demi-angle entre deux jets d'une même nappe.

Ce déphasage angulaire a l'avantage de réduire le risque d'interaction entre les deux nappes lorsque le combustible issu de la nappe inférieure remonte du fond du bol vers la partie haute de la zone Z1 en phase terminale d'injection.

Une particularité de ce système d'injection réside dans le fait qu'il utilise un nombre de trous important et non nécessairement égal sur chacune des nappes avec un nombre de swirl faible, idéalement inférieur à 1.5, afin de réaliser le mélange entre le combustible et le fluide gazeux de la manière la plus rapide possible et ceci majoritairement pendant le processus d'injection.

Ce mélange est alors principalement réalisé par l'entraînement du comburant gazeux par les jets de combustible, la contribution liée au mouvement tourbillonnaire de swirl restant faible et n'étant conservée que pour achever le processus de mélange par un brassage à grande échelle lors de la détente du piston.

Ainsi, pendant l'injection du combustible, le comburant est admis dans la chambre de combustion 34 selon un mouvement de swirl S avec un taux de swirl préférentiellement inférieur à 1,5.

Les jets de combustible sont ici, sans caractère restrictif, au nombre de 24 en étant répartis ici de manière égale entre les deux nappes (12 jets pour la nappe inférieure et 12 jets pour la nappe supérieure) et l'angle b2 est de 15°.

Les jets 40 de combustible de la nappe inférieure sont dirigés vers le fond du bol 46 dans la zone Z1 (figure 3A-coupe selon la ligne AA de la figure 3) alors que les jets 42 de la nappe supérieure sont orientés vers le haut du bol dans la zone Z2 (figure 3B-coupe selon la ligne BB de la figure 3).

Pendant la phase finale d'injection, il peut être constaté que, avec un nombre de swirl Ns modéré, idéalement de l'ordre de 1, les jets de combustible des deux nappes ne se chevauchent pas (figure 4) et que la combustion a utilisé la quasi-totalité du comburant présent dans la zone Z1 (figure 4A-coupe selon la ligne AA de la figure 4) et dans la zone Z2 (figure 4B-coupe selon la ligne BB de la figure 4).

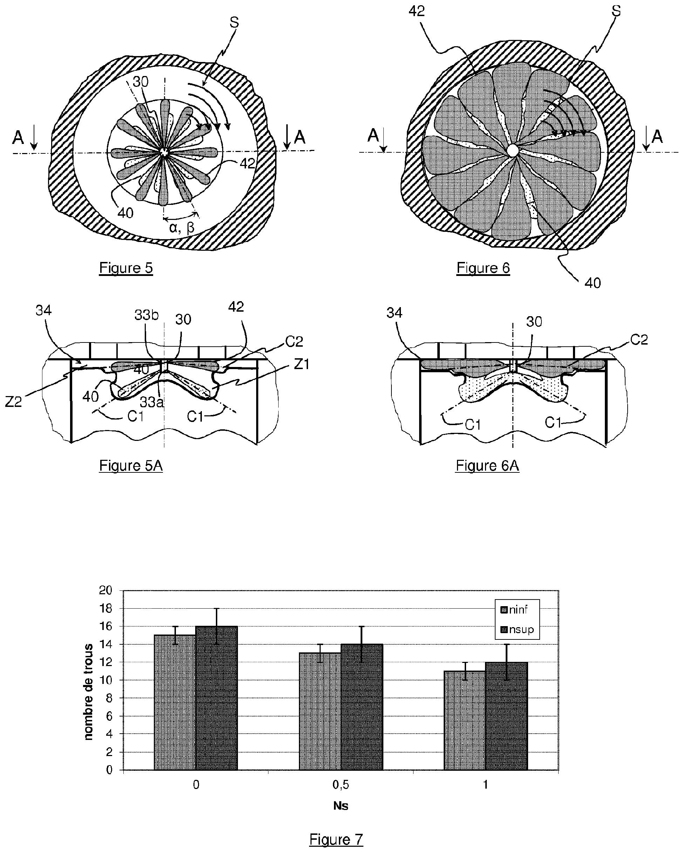

La variante des figures 5, 5A, 6 et 6A se distingue des figures 3 et 4 par le fait que les orifices 33a et 33b des deux nappes se trouvent les uns au-dessus des autres (figure 5, déphasage b2 nul).

Dans cette configuration, les jets 40 de combustible de la nappe inférieure sont dirigés vers le fond du bol 46 dans la zone Z1 alors que les jets 42 de la nappe supérieure sont orientés vers le haut du bol dans la zone Z2 sans que les jets ne se recouvrent les uns aux autres (figure 5A - coupe selon la ligne AA de la figure 5).

De même, il peut être constaté que, lors de la phase finale d'injection avec un nombre de swirl Ns modéré, idéalement de l'ordre de 1, les jets de combustible des deux nappes ne se chevauchent pas (figure 5) et que le carburant a utilisé la quasi-totalité du comburant présent dans les zones Z1 et Z2 (figure 6A- coupe selon la ligne AA de la figure 6).

Ainsi l'utilisation d'un tel système d'injection utilisant un grand nombre de trous privilégie le mélange rapide entre le combustible injecté et le comburant par le mécanisme d'entrainement dans les jets. Toutefois, le nombre de trous doit être adapté dans chacune des zones (Z1 et Z2) au nombre de swirl Ns (via les deux relations proposées, on pourra se rapporter à la figure 7) et à la forme du piston (angles de nappes associés).

Ce mécanisme de mélange rapide permet une plus grande homogénéisation limitant ainsi, lors de la combustion, la génération de polluants tels que les suies dans les zones à forte richesse en combustible ou les NOx dans les zones à faible richesse en combustible. Cette non génération de polluant permet une hausse du rendement de combustion et donc une baisse de la consommation spécifique de ce type de moteur.

## Revendications

1. Moteur à combustion interne à injection directe à allumage par compression comprenant au moins un cylindre (10), une culasse (12) portant des moyens d'injection de combustible (14), un piston (16) coulissant dans ce cylindre, une chambre de combustion (34) délimitée sur un côté par la face supérieure (44) du piston comportant un téton (48) s'érigeant en direction de la culasse et disposé au centre d'un bol concave (46) avec au moins deux zones de mélange (Z1, Z2), lesdits moyens d'injection comprenant au moins un injecteur (30) projetant du combustible selon au moins deux nappes (36, 38) de jets de combustible d'angles de nappe différents (A1, A2), une nappe inférieure (36) d'axe de jet C1 pour la zone (Z1) et une nappe supérieure (38) d'axe de jet C2 pour la zone (Z2), **caractérisé en ce que** l'injecteur de combustible comprend au moins deux rangées d'orifices d'injection (33a, 33b) placées l'une au-dessus de l'autre et que nombre d'orifices de chaque rangée (Ninf, Nsup) est plus grand ou égal que -4.Ns+14 et plus petit ou égal que - 4.Ns+16 pour la rangée inférieure ou -4.Ns+18 pour la rangée supérieure, ou Ns est le taux de swirl de ce moteur, le taux de swirl (Ns) étant égal au rapport entre la vitesse de rotation du mouvement tourbillonnaire du comburant et celle du vilebrequin.

2. Moteur selon la revendication 1, **caractérisé en ce que** le taux de compression minimal est aux environs de 13,5 et le taux de compression maximal est aux environs de 16,5.

3. Moteur selon la revendication 1 ou 2, **caractérisé en ce que** le nombre de swirl (Ns) est préférentiellement inférieur à 1,5 et de manière encore plus préférentiellement de l'ordre de 1.

4. Moteur selon l'une des revendications précédentes, **caractérisé en ce que** les orifices (33a) des jets de combustibles (40) d'une nappe de combustible (36) présente un déphasage angulaire (b2) avec les orifices (33b) des jets de combustibles (42) de l'autre nappe de combustible (38).

5. Moteur selon l'une des revendications précédentes, **caractérisé en ce que** les nappes de jets de combustible (36, 38) comprennent un angle de nappe (A1, A2) différent l'un de l'autre.

6. Procédé d'injection de combustible pour un moteur à combustion interne à injection directe à allumage par compression comprenant au moins un cylindre (10), une culasse (12) portant des moyens d'injection de combustible (14), un piston (16) coulissant dans ce cylindre, une chambre de combustion (34) délimitée sur un côté par la face supérieure (44) du piston comportant un téton (48) s'érigeant en direction de la culasse et disposé au centre d'un bol concave (46), ledit procédé consistant à injecter le combustible selon au moins deux nappes de jets de combustible d'angles de nappe différents (A1, A2), une nappe inférieure (36) d'axe de jet C1 et une nappe supérieure (38) d'axe de jet C2, **caractérisé en ce qu'**il consiste à injecter le combustible par deux rangées d'orifices d'injection (33a, 33b) placées l'une au-dessus de l'autre et que nombre d'orifices de chaque rangée (Ninf, Nsup) est plus grand ou égal que -4.Ns+14 et plus petit ou égal que -4.Ns+16 pour la nappe inférieure ou -4.Ns+18 pour la nappe supérieure ou Ns est le nombre de swirl de ce moteur, le taux de swirl (Ns) étant égal au rapport entre la vitesse de rotation du mouvement tourbillonnaire du comburant et celle du vilebrequin.

## Patentansprüche

1. Brennkraftmaschine mit Direkteinspritzung und mit Selbstzündung, aufweisend mindestens einen Zylinder (10), einen Zylinderkopf (12), welcher Mittel zur Kraftstoffeinspritzung (14) trägt, einen Kolben (16), welcher in diesem Zylinder gleitet, eine Verbrennungskammer (34), welche an einer Seite durch die obere Fläche (44) des Kolbens begrenzt wird, welche einen Ansatz (48) umfasst, welcher sich in Richtung des Zylinderkopfes aufrichtet und in der Mitte einer konkaven Schale (46) mit mindestens zwei Mischzonen (Z1, Z2) angeordnet ist, wobei die Einspritzmittel mindestens eine Einspritzdüse (30) umfassen, welche Kraftstoff gemäß mindestens zweier Teppiche (36, 38) aus Kraftstoffstrahlen mit unterschiedlichen Teppichwinkeln (A1, A2), einem unteren Teppich (36) mit Strahlachse C1 für die Zone (Z1) und einem oberen Teppich (38) mit Strahlachse C2 für die Zone (Z2), ausstößt, **dadurch gekennzeichnet, dass** die Kraftstoffeinspritzdüse mindestens zwei Reihen von Einspritzöffnungen (33a, 33b) aufweist, welche übereinander platziert sind, und dass die Anzahl der Öffnungen von jeder Reihe (Ninf, Nsup) größer als oder gleich -4.Ns+14 und kleiner oder gleich -4.Ns+16 für die untere Reihe oder gleich -4.Ns+18 für die obere Reihe ist, wo Ns die Wirbelrate dieses Motors ist, wobei die Wirbelrate (Ns) gleich dem Verhältnis aus der Rotationsgeschwindigkeit der Wirbelbewegung des Sauerstoffträgers und jener der Kurbelwelle ist.

2. Motor nach Anspruch 1, **dadurch gekennzeichnet, dass** das minimale Verdichtungsverhältnis bei etwa 13,5 liegt und das maximale Verdichtungsverhältnis bei etwa 16,5 liegt.

3. Motor nach Anspruch 1 oder 2, **dadurch gekennzeichnet, dass** die Wirbelzahl (Ns) vorzugsweise kleiner als 1,5 und in noch bevorzugterer Weise in der Größenordnung von 1 ist.

4. Motor nach einem der vorhergehenden Ansprüche, **dadurch gekennzeichnet, dass** die Öffnungen (33a) der Kraftstoffstrahlen (40) eines Kraftstoffteppichs (36) eine Winkelphasenverschiebung (b2) mit den Öffnungen (33b) der Kraftstoffstrahlen (42) des anderen Kraftstoffteppichs (38) aufweisen.

5. Motor nach einem der vorhergehenden Ansprüche, **dadurch gekennzeichnet, dass** die Teppiche aus Kraftstoffstrahlen (36, 38) einen Teppichwinkel (A1, A2) aufweisen, welcher zueinander verschieden ist.

6. Verfahren zur Einspritzung von Kraftstoff für eine Brennkraftmaschine mit Direkteinspritzung und mit Selbstzündung, aufweisend mindestens einen Zylinder (10), einen Zylinderkopf (12), welcher Mittel zur Kraftstoffeinspritzung (14) trägt, einen Kolben (16), welcher in diesem Zylinder gleitet, eine Verbrennungskammer (34), welche an einer Seite durch die obere Fläche (44) des Kolbens begrenzt wird, welche einen Ansatz (48) umfasst, welcher sich in Richtung des Zylinderkopfes aufrichtet und in der Mitte einer konkaven Schale (46) angeordnet ist, wobei das Verfahren darin besteht, den Kraftstoff gemäß mindestens zweier Teppiche aus Kraftstoffstrahlen mit unterschiedlichen Teppichwinkeln (A1, A2), einem unteren Teppich (36) mit Strahlachse C1 und einem oberen Teppich (38) mit Strahlachse C2, einzuspritzen, **dadurch gekennzeichnet, dass** es darin besteht, den Kraftstoff durch zwei Reihen von Einspritzöffnungen (33a, 33b) einzuspritzen, welche übereinander platziert sind und dass die Anzahl der Öffnungen von jeder Reihe (Ninf, Nsup) größer als oder gleich -4.Ns+14 und kleiner oder gleich -4.Ns+16 für den unteren Teppich oder gleich -4.Ns+18 für den oberen Teppich ist, wo Ns die Wirbelzahl dieses Motors ist, wobei die Wirbelrate (Ns) gleich dem Verhältnis aus der Rotationsgeschwindigkeit der Wirbelbewegung des Sauerstoffträgers und jener der Kurbelwelle ist.

## Claims

1. Compression-ignition direct-injection internal combustion engine comprising at least one cylinder (10), a cylinder head (12) bearing fuel injection means (14), a piston (16) sliding in this cylinder, a combustion chamber (34) delimited on one side by the upper face (44) of the piston comprising a nipple (48) rising in the direction of the cylinder head and arranged at the centre of a concave bowl (46) with at least two mixing zones (Z1, Z2), said injection means comprising at least one injector (30) spraying fuel in at least two layers (36, 38) of fuel jets having different layer angles (A1, A2), a lower layer (36) with jet axis C1 for the zone (Z1) and an upper layer (38) with jet axis C2 for the zone (Z2), **characterized in that** the fuel injector comprises at least two rows of injection orifices (33a, 33b) placed one above the other, and **in that** the number of orifices of each row (N_{lower}, Nᵤₚₚₑᵣ) is greater than or equal to -4.Ns+14 and less than or equal to -4.Ns+16 for the lower row or -4.Ns+18 for the upper row, where Ns is the swirl rate of this engine, the swirl rate (Ns) being equal to the ratio between the speed of rotation of the swirling movement of the oxidant and that of the crankshaft.

2. Engine according to Claim 1, **characterized in that** the minimum compression rate is in the vicinity of 13.5, and the maximum compression rate is in the vicinity of 16.5.

3. Engine according to Claim 1 or 2, **characterized in that** swirl number (Ns) is preferably less than 1.5 and more preferably still of the order of 1.

4. Engine according to one of the preceding claims, **characterized in that** the orifices (33a) of the fuel jets (40) of a fuel layer (36) have an angular offset (b2) with the orifices (33b) of the fuel jets (42) of the other fuel layer (38).

5. Engine according to one of the preceding claims, **characterized in that** the layers (36, 38) of fuel jets comprise layer angles (A1, A2) which are different from one another.

6. Fuel injection method for a compression-ignition direct-injection internal combustion engine comprising at least one cylinder (10), a cylinder head (12) bearing fuel injection means (14), a piston (16) sliding in this cylinder, a combustion chamber (34) delimited on one side by the upper face (44) of the piston comprising a nipple (48) rising in the direction of the cylinder head and arranged at the centre of a concave bowl (46), said method consisting in injecting the fuel in at least two layers of fuel jets having different layer angles (A1, A2), a lower layer (36) with jet axis C1 and an upper layer (38) with jet axis C2, **characterized in that** it consists in injecting the fuel through two rows of injection orifices (33a, 33b) placed one above the other, and **in that** the number of orifices of each row (N_{lower}, Nᵤₚₚₑᵣ) is greater than or equal to -4.Ns+14 and less than or equal to -4.Ns+16 for the lower layer or -4.Ns+18 for the upper layer, where Ns is the swirl number of this engine, the swirl rate (Ns) being equal to the ratio between the speed of rotation of the swirling movement of the oxidant and that of the crankshaft.
